# EUROPEAN PATENT APPLICATION

(11) **EP 4 814 534 A1**
(43) Date of publication of application: **30.09.2026**
(21) Application number: 25166656.6
(22) Date of filing: 27.03.2025
(51) Int. Cl.: G01S 7/41, G01S 13/88, G08B 21/10, G08B 29/18, G06N 3/02

(54) **REDUCTION OF FALSE POSITIVE DETECTIONS OF GRAVITATIONAL NATURAL HAZARDS IN RADAR DATA**

(71) Applicant: Geopraevent AG, 8045 Zürich (CH)
(72) Inventor: HAHNER, Martin, 8047 Zürich (CH)
(74) Representative: Kaminski Harmann

(57) **Abstract**

The invention pertains to a computer-implemented method (100) for detecting gravitational natural hazards, the method comprising: continuously receiving (110) radar data in real time; continuously monitoring (120) the radar data using a detection algorithm, to detect (130) an indication for a gravitational natural hazard event in the radar data; and, if an indication for a gravitational natural hazard event has been detected, initiating (140) an action in real time, wherein: upon detection of an indication for a gravitational natural hazard event, a trained neural network evaluates (160) radar data that has been accumulated (150) for at least a defined period of time; the trained neural network confirms (170) or refutes the gravitational natural hazard event based on the evaluation; and if the gravitational natural hazard event has been refuted, the initiated action is automatically revised (180).

## Description

The present invention generally pertains to the field of natural hazard detection. More specifically, it pertains to the field of detecting gravitational natural hazards using radar systems.

Gravitational natural hazards include but are not limited to events such as avalanches, landslides, mudslides, debris flows and rockfalls. They occur when rock, mud or snow masses fall or slide down a slope due to gravity. Historically, detection of such hazards has relied on physical sensors and manual observations. These methods often involve seismic sensors, infrasound sensors, or visual monitoring. While effective to some extent, these methods can be limited by environmental conditions and require significant human intervention. More recently, radar systems have been employed to detect gravitational natural hazards by analyzing distance as well as oncoming or outgoing movements in the radars field of view. These systems are effective in various weather conditions, including fog and rain/snowfall, where vision or laser based systems stop working.

Disadvantageously, all these methods, including the ones that are based on radar, struggle with distinguishing between actual events and false alarms, e.g., due to noise, interference, or environmental factors, leading to unnecessary alerts and resource allocation. It would be desirable to reduce the number of false positives. Some solutions have been implemented to improve detection accuracy using basic machine learning algorithms, such as decision trees or support vector machines. However, these methods fail to capture complex patterns in radar data. In addition, some of these methods require significant manual intervention, making them less scalable and inefficient, while others require manual feature engineering and do not adapt well to new data.

It is therefore an object of the present invention to provide an improved computer-implemented method and an improved system for radar-based detection of gravitational natural hazards.

It is another object of the invention to provide such a method and system having enhanced detection precision, thus reducing the occurrence of false alarms.

It is a particular object to provide such a method and system that allow reducing the number of false positives in radar-based detection of gravitational natural hazards, thus reducing resource allocation due to unnecessary alerts.

It is a further object to provide such a method and system that work without user involvement - e.g., fully autonomously.

At least one of these objects is achieved by the computer-implemented method according to claim 1, the system according to claim 12, and/or the dependent claims of the present invention.

The proposed solution makes use of an artificial neural network that processes accumulated radar data to determine the likelihood of an actual gravitational natural hazard event, e.g., an avalanche or a rockfall event. This network is trained to recognize patterns and differentiate between true events and false alarms. By re-evaluating the situation with more data, the proposed method and system minimizes the impact of false alarms on resources and infrastructure by reducing unnecessary interventions. For instance, this allows significantly reducing unnecessary measures such as road closures, thereby improving the flow of traffic and reducing the inconvenience to the public. The solution comprises a dual-stage evaluation, wherein the combination of immediate response and delayed confirmation is a key feature, providing, both, quick action and accuracy. The use of neural networks allows the system to adapt and learn over time from new data, improving performance over time with minimal manual intervention. The proposed solution can generalize to different sites as it is trained with more and more data from various locations over time. This way it can distinguish real events of various sizes accurately from common false alarms, e.g. caused by weather-related noise in the atmosphere.

A first aspect of the invention pertains to a computer-implemented method for detecting gravitational natural hazards, the method comprising continuously receiving radar data in real time, continuously monitoring the radar data using a detection algorithm to detect an indication for a gravitational natural hazard event in the radar data, and, if an indication for a gravitational natural hazard event has been detected, initiating an action in real time. In addition, upon detection of an indication for a gravitational natural hazard event, a trained neural network evaluates radar data that has been accumulated for at least a defined period of time, and confirms or refutes the gravitational natural hazard event based on the evaluation. If the gravitational natural hazard event has been refuted, the initiated action is then automatically revised.

For instance, the gravitational natural hazard event may be one of an avalanche, a landslide, a mudslide, a debris flow and a rockfall.

According to some embodiments, the method further comprises accumulating the received radar data, for instance wherein the received radar data is stored in a data storage and retrieved from the data storage for the evaluation.

In some embodiments, accumulating the radar data starts upon detection of the indication for a gravitational natural hazard event (e.g., immediately after the detection). For instance, the defined period of time starts at the point of time at which the indication for the gravitational natural hazard event has been detected.

In other embodiments, accumulating the received radar data comprises continuously accumulating the received radar data. For instance, the defined period of time starts at a point of time before the detection of the indication for the gravitational natural hazard event and ends at a point of time after the detection of the indication for the gravitational natural hazard event.

According to some embodiments of the method, the radar data is received from a radar system that is configured as a doppler radar.

According to some embodiments of the method, the detection algorithm is a rule-based algorithm.

According to some embodiments of the method, initiating the action comprises sending a command to an alarm infrastructure and/or remotely controlling one or more components of an alarm infrastructure. For instance, said alarm infrastructure comprises:
- one or more traffic lights and/or barriers, wherein initiating the action comprises controlling the traffic lights and/or barriers for closing a road or a railway track,
- one or more sirens, wherein initiating the action comprises controlling the sirens to trigger an acoustic emergency signal, and/or
- one or more warning light signals, wherein initiating the action comprises the warning light to trigger a visual emergency signal.

According to some embodiments, if the occurrence of the gravitational natural hazard has been confirmed, the method comprises automatically initiating further actions. For instance, initiating said further actions comprises
- sending a command to an alarm infrastructure,
- remotely controlling one or more components of an alarm infrastructure, and/or
- sending one or more messages to personal devices located in an area that is potentially affected by the gravitational natural hazard, particularly via one of GSM, Wi-Fi, fiberoptic, radio, satellite communication and/or LoRa-WAN.

According to some embodiments of the method, the trained neural network also evaluates further data from one or more further sensors. In some embodiments, the further sensors comprise one or more of seismic sensors, infrasound sensors, cameras, infrared sensors, and microphones. In some embodiments, the further data is received upon detection of the indication for a gravitational natural hazard event. In some embodiments, the one or more further sensors are activated upon detection of the indication for a gravitational natural hazard event. In some embodiments, the trained neural network also evaluates weather data.

According to some embodiments, the method is performed in a computing unit having at least one first data connection for continuously receiving the radar data from a radar system in real time. In particular, the computing unit also comprises at least one second data connection for sending commands to an alarm infrastructure for initiating the action and/or for revising the initiated action.

A second aspect of the invention pertains to a system for detecting gravitational natural hazards - e.g. according to the method of the first aspect. The system comprises a computing unit having at least one first data connection to continuously receive real-time radar data from a radar system and having stored a detection algorithm configured to continuously monitor the radar data to detect an indication for a gravitational natural hazard event in the radar data. According to this aspect of the invention, the computing unit has stored a trained neural network configured to evaluate, upon detection of indication for a gravitational natural hazard event, radar data that has been accumulated for at least a defined period of time, and to confirm or refute the gravitational natural hazard event based on the evaluation.

According to some embodiments, the system comprises the radar system, particularly wherein the radar system is configured as a doppler radar.

A third aspect of the invention pertains to a computer program product comprising program code, which is stored on a machine-readable medium or embodied by an electromagnetic wave comprising a program code segment, and having computer-executable instructions for performing, in particular when run on a computing unit of a system according to the second aspect, the method according to the first aspect of the invention.

The invention in the following will be described in detail by referring to exemplary embodiments that are accompanied by figures, in which:
- Fig. 1: shows an exemplary embodiment of a system according to the invention;
- Figs. 2a-c: show three exemplary radar images; and
- Fig. 3: is a flowchart illustrating an exemplary embodiment of a computer-implemented method according to the invention.

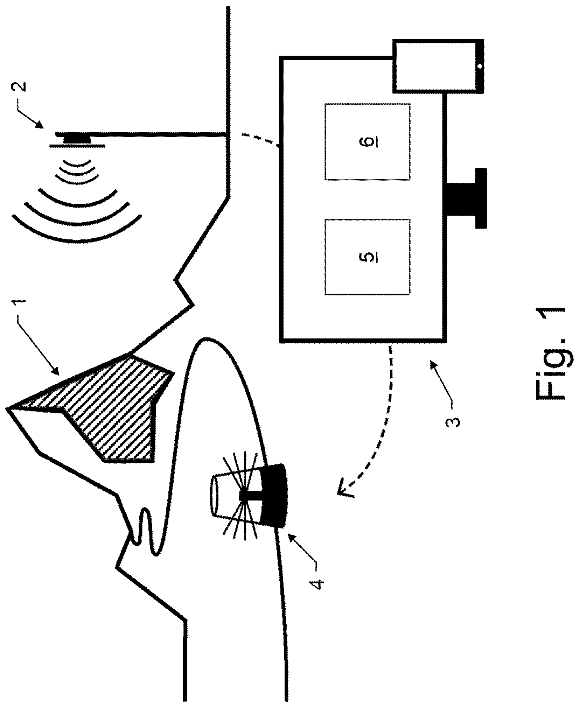

In Figure 1 an exemplary embodiment of a system according to the invention is shown. The system comprises a computing unit 3, which is configured to continuously receive radar data from a radar unit 2, to evaluate the radar data in real time to determine whether the radar data is indicative of a current gravitational natural hazard 1. If the occurrence of such a gravitational natural hazard 1 is determined, the computing unit 3 automatically initiates a number of actions. As shown here, these actions may include triggering an alarm using alarm infrastructure 4 at an area that is endangered by the hazard 1. For instance, a road or railway section that lies below a detected avalanche and therefore might be hit by said avalanche in the near future. To prevent potential harm in the endangered area, it may be closed using installed traffic signals or barriers.

Gravitational natural hazards 1 include snow and ice avalanches, as well as landslides (which in turn comprise rockfall, rock avalanches, debris flows, and slower slope instabilities). For instance, avalanches occur suddenly and are hard to predict. An alarm system with automatic avalanche detection makes it possible to detect an avalanche early on (i.e., high on the mountain), in order to, e.g., trigger an alarm, close roads or railways, or evacuate a construction site endangered by the gravitational natural hazard 1. A radar unit 2 that is used as an avalanche radar may comprise a doppler radar that is configured to detect moving snow masses on an entire hillside. For instance, with a measurement range of 5 km and a coverage of 10 km² it is possible to cover multiple avalanche paths with one avalanche doppler radar, and to track and map detected avalanches. Similarly, a doppler radar can also be used to detect other kinds of gravitational natural hazards 1, such as rockfall or debris flows. The basic prerequisite for an alarm system is sufficient advance warning time between the detection of the event and the arrival of the hazard at endangered infrastructure.

Data transmission between radar unit 2, computing unit 3 and alarm infrastructure 4 may include GSM (cellular network), Wi-Fi, fiberoptic, radio (including directional radio) and/or LoRa-WAN. Preferably, at least two independent communication channels can be used.

The radar unit 2 comprises one or more radar devices (e.g., doppler radar devices) having sensors that are directed towards one or more areas that have a potential for gravitational natural hazards 1, e.g., towards a slope, hillside or rock face.

The computing unit 3 may be of any kind, for instance a server computer, a desktop computer or a portable device. A rule-based detection algorithm 5 runs on the computing unit 3 to evaluate the continuously received radar data in real time to determine whether the radar data is indicative of a currently occurring gravitational natural hazard 1. The detection algorithm 5 is a "live" algorithm capable of making rapid decisions within a few seconds based on the radar data. This is crucial for immediate responses, such as activating traffic lights or barriers to close endangered roads or railroads. If the rule-based detection algorithm 5 determines that the radar data is indicative of a gravitational natural hazard 1, the alarm (and/or other actions) is automatically triggered/initiated in real time.

An alarm can be triggered in different ways, including the uses of traffic lights and gates, sirens, radios with headphones for noisy environments (e.g., for construction sites in endangered areas), or messaging through SMS, email or automated calls (cell broadcast or prioritized services).

In addition, a trained neural network 6 is installed on the computing unit 3. After the initial decision, i.e., as soon as the rule-based detection algorithm 5 has determined that the radar data is indicative of a gravitational natural hazard 1, the system continues to accumulate radar data over a period of time and the trained neural network 6 then uses this accumulate radar data for a secondary evaluation in order to confirm or refute the initial decision by the "live" algorithm, i.e., the occurrence of the gravitational natural hazard 1.

If the trained neural network 6 refutes the occurrence of the hazard 1 (i.e., comes to the conclusion that the decision of the rule-based algorithm 5 was false), the initiated action (e.g., triggered alarm) can be revised.

If the trained neural network 6 confirms the occurrence of the hazard 1 (i.e., comes to the conclusion that the decision of the rule-based algorithm 5 was correct), further actions can be initiated, e.g., another message can be sent to confirm that the occurrence of the hazard 1 did indeed occur.

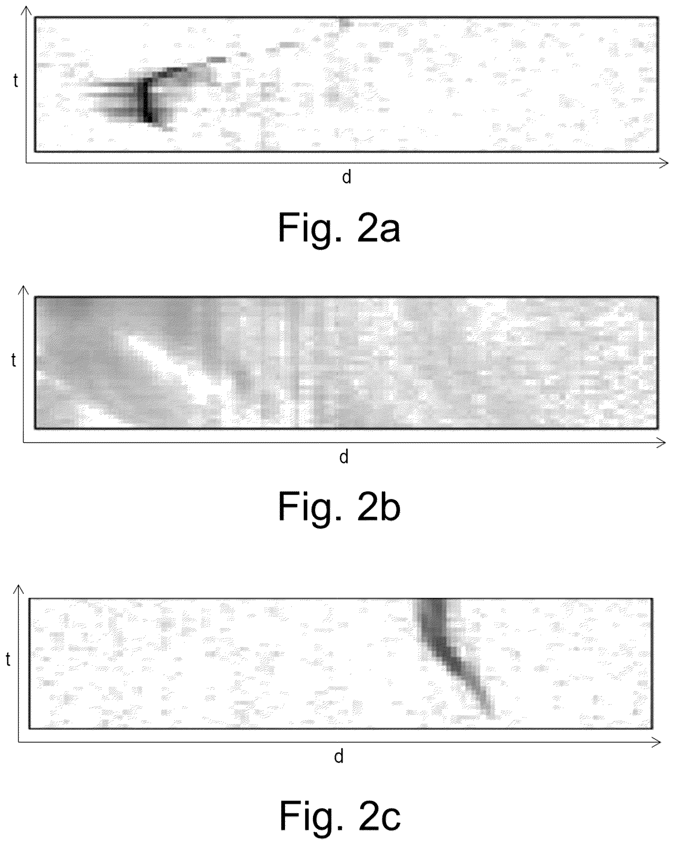

Figures 2a, 2b and 2c show three exemplary visualizations of accumulate radar data, each image showing activity measured by the radar at a distance (d) from the radar unit 2 over a time period (t). The darker the pixel of the image, the higher the activity. These images are derived from the raw data of a doppler radar system. Each image shows an example of a radar signal that has triggered an alert due to a rule-based algorithm 5 having determined indications of a gravitational natural hazard 1.

In the example of Figure 2a, a helicopter passing by causes the dark pattern in the image. In Figure 2b, the patterns are caused by weather-related noise in the atmosphere. In both cases, many rule-based algorithms trigger a false alarm. Figure 2c shows an image, wherein the dark pattern is caused by an avalanche, i.e., a currently occurring gravitational natural hazard 1.

A neural network can be trained using such images derived from the raw data of a doppler radar system. The use of neural networks allows the system to learn and adapt over time, improving its performance with continued use. When being trained with more and more data from various locations over time, the neural network learns to distinguish real events of various sizes accurately from common false alarms, e.g. caused by weather-related noise in the atmosphere.

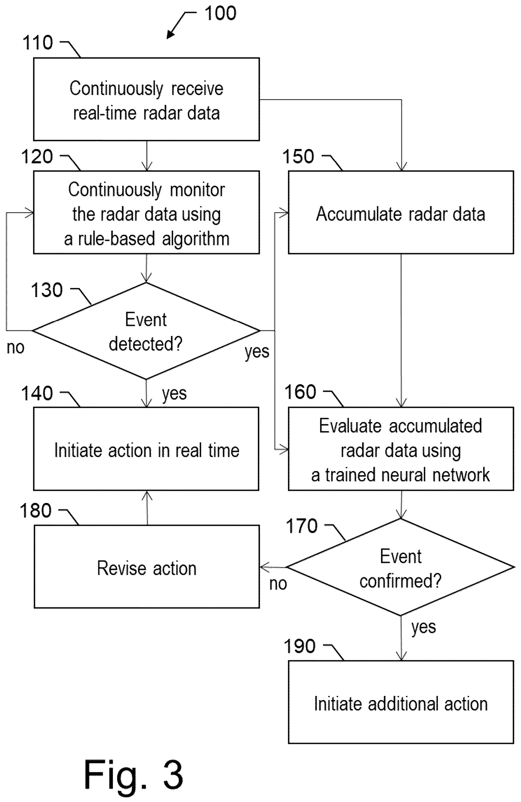

The flowchart of Figure 3 illustrates an exemplary embodiment of a computer-implemented method 100 for detecting gravitational natural hazards according to the invention. Said method can be performed fully automatically - for instance by the system described with respect to Figure 1.

Radar data is continuously received 110 from a radar device in real time, i.e., without significant delay. A rule-based "live" detection algorithm continuously monitors 120 the received radar data, examining the radar data for indications of an event that is or appears to be a gravitational natural hazard. This receiving and monitoring is continued until such an event is detected 130. In that case, an action is initiated 140 in real time, i.e., without significant delay. This immediate response is a key feature of natural hazard detection and provides quick action in order to prevent harm to people and moveable objects in the area endangered by a gravitational natural hazard 1.

The initiated action may be standardized for all detected events. Alternatively, the radar data may be interpreted with respect to a kind, size or position of the detected event, so that the action may be tailored especially for the kind, size or position of the gravitational natural hazard. For instance, if an event is detected, all individuals in a pre-defined area may be warned, e.g., by sirens and/or cell broadcast, or only those in the vicinity of the area that is expected to be affected by the natural hazard.

Since false positives may occur - e.g. triggered by certain weather changes or flying objects in the field of view of the radar unit - according to the invention, a trained neural network is provided for a secondary evaluation 160 in order to confirm 170 or refute the "live" algorithm's decision.

When the rule-based algorithm detects 130 the event, the radar data is still received and accumulated 150 over a period of time. This period needs to be sufficiently long for the evaluation 160 by the trained neural network, e.g. at least multiple seconds (e.g., for 30 seconds). The period may be pre-defined.

In some embodiments, the accumulation 150 is started only upon detection of the event. The neural network then evaluates 160 the accumulated radar data, e.g., starting with the evaluation after the period of time has elapsed.

In other embodiments, the received data is accumulated 150 already before an event is detected 130. Optionally, the method 100 may comprise a continuous data accumulation 150. Instead of starting data accumulation only after an event is detected 130 by the "live" algorithm, in some embodiments, the method comprises continuously accumulating enough data for a revised decision making of the neural network. This allows for combined real-time analysis by the rule-based algorithm and the trained neural network at the same point in time. This approach could enhance the accuracy of the real-time detection, potentially identifying patterns or precursors to events that might otherwise be missed by the rule-based algorithm alone. In yet another embodiment, the neural network may also evaluate 160 data from before and after the detected event.

Thus, the period of time radar data over which the radar data is accumulated 150 starts before the detected event. The neural network evaluates 160 the accumulated radar data either upon detection of the event or after sufficient further radar data after the detected event has been accumulated. Optionally, the neural network may proceed with monitoring/evaluating the radar data beyond the period of time until a certain degree of certainty is reached that the radar data shows an event that either is or is not a gravitational natural hazard.

If the neural network confirms 170 that the event detected by the "live" algorithm, then the initiated actions may remain. Otherwise, i.e., if the event detected by the "live" algorithm is refuted by the neural network, the initiated action can be revised 170. This may include cancelling or reversing the initiated action and/or initiating counteractions that undo the actions. For instance, if the initiated actions include an alert, then revising 180 the actions may include an all-clear signal; if the initiated actions include switching a traffic signal to "red", then revising the actions includes switching the traffic signal off (or to "green", "flashing yellow" etc.).

Optionally, if the neural network confirms 170 the detected event, additional actions may be initiated 190. In particular, these further actions may include actions that are less time-critical but require more effort. For instance, if the initiated actions include switching a traffic signal to "red", then the additional actions may include closing barriers to close a road also physically. Also, the further actions may be based on further inside that the neural network has gained from evaluating 160 the data. For instance, dependent on a size and direction of an avalanche, additional alarms may be triggered at some places, whereas existing alarms may be stopped at other places.

Optionally, additional sensors may be integrated into the proposed solution. Particularly, the neural network may evaluate 160 data also from other sensors than the radar data used by the "live" algorithm. These other sensors may comprise seismic or infrasound sensors, cameras, microphones and/or weather information to complement the radar data. This provides a multi-modal approach to detection, increasing the system's reliability and reducing false positives by cross-verifying events.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for detecting gravitational natural hazards (1), the method comprising
- continuously receiving (110) radar data in real time;
- continuously monitoring (120) the radar data a using a detection algorithm (5), to detect (130) an indication for a gravitational natural hazard event (1) in the radar data; and,
- if an indication for a gravitational natural hazard event (1) has been detected (130), initiating (140) an action in real time,
**characterized in that**
- upon detection (130) of an indication for a gravitational natural hazard event (1), a trained neural network (6) evaluates (160) radar data that has been accumulated (150) for at least a defined period of time;
- the trained neural network (6) confirms (170) or refutes the gravitational natural hazard event (1) based on the evaluation (160); and
- if the gravitational natural hazard event (1) has been refuted, the initiated action is automatically revised (180).

2. Method (100) according to claim 1, wherein the gravitational natural hazard event (1) is one of an avalanche, a landslide, a mudslide, a debris flow and a rockfall.

3. Method (100) according to claim 1 or claim 2, further comprising accumulating (150) the received radar data, particularly wherein the received radar data is stored in a data storage and retrieved from the data storage for the evaluation (160).

4. Method (100) according to claim 3, wherein accumulating (150) the radar data starts upon detection (130) of the indication for a gravitational natural hazard event (1), particularly wherein the defined period of time starts at the point of time at which the indication for the gravitational natural hazard event (1) has been detected (130).

5. Method (100) according to claim 3, wherein accumulating (150) the received radar data comprises continuously accumulating (150) the received radar data, particularly wherein the defined period of time starts at a point of time before the detection (130) of the indication for the gravitational natural hazard event (1) and ends at a point of time after the detection (130) of the indication for the gravitational natural hazard event (1).

6. Method (100) according to any one of the preceding claims, wherein the radar data is received (110) from a radar system (2) that is configured as a doppler radar.

7. Method (100) according to any one of the preceding claims, wherein the detection algorithm (5) is a rule-based algorithm.

8. Method (100) according to any one of the preceding claims, wherein initiating (140) the action comprises
- sending a command to an alarm infrastructure (4), and/or
- remotely controlling one or more components of an alarm infrastructure (4),
particularly wherein the alarm infrastructure (4) comprises
- one or more traffic lights and/or barriers, wherein initiating (140) the action comprises controlling the traffic lights and/or barriers for closing a road or a railway track,
- one or more sirens, wherein initiating (140) the action comprises controlling the sirens to trigger an acoustic emergency signal, and/or
- one or more warning light signals, wherein initiating (140) the action comprises the warning light to trigger a visual emergency signal.

9. Method (100) according to any one of the preceding claims, wherein, if the occurrence of the gravitational natural hazard (1) has been confirmed (170), the method comprises automatically initiating (190) further actions, particularly wherein initiating (190) the further actions comprises
- sending a command to an alarm infrastructure (4),
- remotely controlling one or more components of an alarm infrastructure (4), and/or
- sending one or more messages to personal devices located in an area that is potentially affected by the gravitational natural hazard (1), particularly via one of GSM, Wi-Fi, fiberoptic, radio, satellite communication and/or LoRa-WAN.

10. Method (100) according to any one of the preceding claims, wherein the trained neural network (6) also evaluates (160) further data from one or more further sensors, particularly wherein
- the further sensors comprise one or more of seismic sensors, infrasound sensors, cameras, infrared sensors, and microphones;
- the further data is received upon detection (130) of the indication for a gravitational natural hazard event (1);
- the one or more further sensors are activated upon detection (130) of the indication for a gravitational natural hazard event (1); and/or
- the trained neural network (6) also evaluates (160) weather data.

11. Method (100) according to any one of the preceding claims, wherein the method is performed in a computing unit (3) having at least one first data connection for continuously receiving (110) the radar data from a radar system (2) in real time, particularly wherein the computing unit (3) comprises at least one second data connection for sending commands to an alarm infrastructure (4) for initiating (140) the action and for revising (180) the initiated action.

12. System for detecting gravitational natural hazards (1), the system comprising a computing unit (3), the computing unit (3)
- having at least one first data connection to continuously receive (110) real-time radar data from a radar system (2); and
- having stored a detection algorithm (5) configured to continuously monitor (120) the radar data to detect (130) an indication for a gravitational natural hazard event (1) in the radar data;
**characterized in that**
the computing unit (3) has stored a trained neural network (6) configured to evaluate (160), upon detection (130) of indication for a gravitational natural hazard event (1), radar data that has been accumulated (150) for at least a defined period of time, and to confirm (170) or refute the gravitational natural hazard event (1) based on the evaluation (160).

13. System according to claim 12, comprising the radar system (2), particularly wherein the radar system (2) is configured as a doppler radar.

14. System according to claim 12 or claim 13, the system being configured to perform the method of any one of claims 1 to 11.

15. Computer program product comprising program code, which is stored on a machine-readable medium or embodied by an electromagnetic wave comprising a program code segment, and having computer-executable instructions for performing, in particular when run on a computing unit (3) of a system according to any one of claims 12 to 14, the method (100) according to any one of the claims 1 to 11.
